# EUROPEAN PATENT SPECIFICATION

(11) **EP 2 334 910 B1**
(45) Date of publication and mention of the grant of the patent: **26.06.2013**
(21) Application number: 09815388.5
(22) Date of filing: 22.09.2009
(51) Int. Cl.: F01D 25/24, F03B 11/02, F03D 11/00, F04D 29/40, F02C 6/12, F01D 9/02

(54) **FABRICATED TURBINE HOUSING**
GEFERTIGTES TURBINENGEHÄUSE
CARTER DE TURBINE FABRIQUE

(30) Priority: 30.01.2009 US 206559 P; 22.09.2008 US 192758 P; 22.09.2008 US 192759 P
(43) Date of publication of application: 22.06.2011
(73) Proprietor: Metaldyne Company LLC, Plymouth, MI 48177 (US)
(72) Inventor: SCHMIDT, Michael, Paul, Howell, MI 48855 (US); PHILLIPS, Robert, A., Stockbridge, MI 49285 (US)
(74) Representative: Müller-Boré & Partner Patentanwälte
(86) International application number: PCT/US2009/057861
(87) International publication number: WO 2010/033996

(56) References cited:
- EP-A2- 1 357 278
- EP-A2- 1 531 238
- DE-A1-102004 039 477
- DE-B3- 10 307 028
- US-A- 3 666 000
- US-A- 4 678 397
- US-A- 4 790 139
- US-A- 5 810 556
- US-A1- 2008 202 117
- US-B1- 6 908 595
- US-B2- 6 945 046

## Description

### FIELD OF INVENTION

The present invention relates generally to turbine housings, and more particularly, to methods and apparatus for fabricating turbine housings.

### BACKGROUND

As is known in the art, turbochargers are often used with combustion engines to increase the power output of the engine. Turbochargers increase power by increasing the amount of air used to facilitate combustion in the engine. Increasing the amount to air provided to the cylinders of the engine allows for a proportional increase in the amount to fuel that may be burned in the engine. This increased fuel amount leads to increased power output.

Turbochargers utilize the engine's exhaust to spin a turbine, which in turn spins an air pump to compress air. The compressed air is pumped into the cylinders during combustion. The turbine is typically positioned within a housing that includes an inlet for the engine's exhaust. The housing has a generally volute shape so that exhaust channeled into the housing creates rotational flow as to spin the turbine located in the housing.

Traditional turbine housings suffer from several deficiencies. For example, as explained in further detail below, cross-flow of exhaust within the volute housing can cause a decrease in turbine power. Additionally, the turbocharger system may experience power losses due to exhaust gas leaks at slip joints on the housing. Further, altering the size and geometry of the turbine to maximize output often requires replacing the housing and other housing components to fit the new turbine. Accordingly, there is a need in the art for an improved turbine housing.

EP 1 531 238 A2 discloses a housing arrangement for the turbocharger of an internal combustion engine having a rotor casing with an inlet duct, an exhaust gas overflow section connected to the rotor casing and connected to an exhaust flange, and an outer casing enclosing the overflow section, rotor casing and inlet duct. The overflow section is connected to the rotor casing to move relative to it. The rotor casing has an axially orientated pipe-form outlet connector over which fits the cylindrical end of the overflow section with relative movement capability.

US 2008/202117 A1 discloses an exhaust line element for a supercharged heat engine comprising an exhaust manifold and a turbocompressor. The manifold comprises at least two separate inlets equipped with connection means at the outlet of the cylinders of the engine and a discharge outlet for the exhaust gases which is common to the different inlets and which is connected to the inlet tube of the turbocompressor. It further comprises a bundle of internal tubes which converge towards the outlet, each from an inlet of the manifold, and an outer casing inside which the bundle of tubes extends. The inlet tube and the outlet of the manifold are connected by means of a peripheral weld seam which is provided between the outer casing and the inlet tube of the turbocompressor, and the bundle of tubes is left free from any welding to the inlet tube of the turbocompressor at the outlet of the manifold.

DE 10 2004 039477 A1 discloses a turbine housing with a body having a spiral housing separated in a plane transverse to an axis of rotation of a turbocharger, where parts of the housing are welded to each other. One part is welded with a contour bushing and/or an outlet connection and another part which is to be fastened with a connecting unit is welded at a bearing casing. The former part forms spiral shaped contour of a spiral canal and the latter part is a flat base plate.

DE 103 07 028 B3 discloses an exhaust gas manifold having a flange plate directly attached to the engine block of the IC engine, provided with an opening for each of the engine cylinders and a sheet steel manifold housing, providing gas channels leading from the openings to an exhaust gas turbine of a turbocharger. The manifold housing has two outer shells and an intermediate shell welded to the flange plate, together defining two tapering spiral channels around the outside of the turbine wheel, one outer shell secured to the turbine wheel mounting, the other outer shell providing a mantle for the turbine wheel.

### SUMMARY OF THE PRESENT INVENTION

A turbine housing apparatus is provided. The turbine housing may be volute shaped and includes a tongue diverter disposed therein. In an embodiment, the turbine housing is assembled by joining two half-shells. A portion of a tongue diverter is formed in each of the half-shells. When the shells are assembled, the formed portions align to form the tongue diverter. The tongue diverter is arranged to manage the interaction between exhaust gases entering the inlet and exhaust gasses flowing within the housing. The tongue member may also be arranged to produce a constant ratio throughout the turbine housing between the cross-sectional area of fluid passages and the distance between the centroid of that area and the axis of rotation of the turbine. The turbine housing further includes one or more mesh rings disposed along the housing to reduce exhaust gas leaks. Additionally, a formed tube interconnects the inner housing shell and the downpipe to allow for easy changes to the size and geometry of the turbine.

### BRIEF DESCRIPTION OF THE SEVERAL VIEWS OF THE DRAWINGS

Objects and advantages together with the operation of the invention may be better understood by reference to the detailed description taken in connection with the following illustrations, wherein:

FIG. 1 is a schematic view of a turbine housing;

FIG. 2 is a perspective view of a turbine housing having a virtual plane extending therethrough;

FIG. 3 is a cross-sectional view of the turbine housing of FIG. 2 taken along the virtual plane;

FIG. 4 is a detailed view of a tongue member;

FIG. 5 is a perspective view of a turbine housing;

FIG. 6 is a detailed view of the tongue member of FIG. 5;

FIG. 7 is a perspective view of a turbine housing;

FIG. 8 is a detailed view of the tongue member of FIG. 7;

FIG. 9 is a perspective view of a turbine housing having a virtual plane extending therethrough;

FIG. 10 is a cross-sectional view of the turbine housing of FIG. 9 taken along the virtual plane;

FIG. 11 is a first detailed view of a mesh ring of FIG. 10;

FIG. 12 is a second detailed view of a mesh ring of FIG. 10;

FIG. 13 is a perspective view of a turbine housing having a virtual plane extending therethrough;

FIG. 14 is a cross-sectional view of the turbine housing of FIG. 13 taken along the virtual plane;

FIG. 15 is a detailed view of the adapter tube of FIG. 14.

### DETAILED DESCRIPTION

Reference will now be made in detail to exemplary embodiments of the present invention, examples of which are illustrated in the accompanying drawings. It is to be understood that other embodiments may be utilized and structural and functional changes may be made without departing from the respective scope of the present invention.

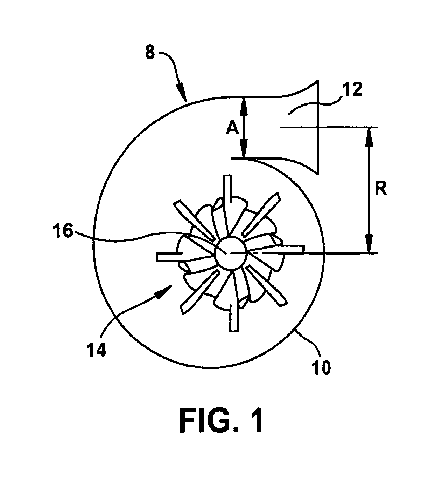

The efficiency of the power generated by a turbocharged engine may depend on the efficiency in which a turbine housing manages and channels the flow of the engine's exhaust through the turbine housing. FIG. 1 is a schematic illustration of a turbine housing **8.** The turbine housing **8** includes a generally volute-shaped inner housing **10** and an inlet **12** at the opening of the inner housing **10**. The volute shape and the position of the inlet **12** promote rotational flow within the inner housing **10**. Such rotational flow spins a turbine **14** positioned generally in the center of the inner housing **10**. As will be understood, as exhaust gases flow along the perimeter of the inner housing **10,** such flowing gases may make more than one revolution around the perimeter before exiting the inner housing **10**. As the gases flow around the perimeter, the gases may interact with new exhaust gases entering the inner housing **10** through the inlet **12.** Failure to manage the interaction between the exhaust gases flowing through the inner housing **10** and the exhaust gases newly introduced into the inner housing **10** may prevent the power output of the engine from realizing optimizal efficiency. As will be described in detail below, a tongue diverter may be positioned proximate to the inlet **12** to manage the interaction between the gases flowing through the inner housing **10** and the gases entering the inner housing **10** through the inlet **12.**

One method of optimizing power output for a turbocharged engine is to maintain certain geometric ratios within the inner housing **10.** For example as shown in FIG. 1, the cross-sectional area **A** of the flow path at any point along the flow path may be measured or otherwise determined, and the radial distance **R** of the centroid of that area **A** to the rotational axis **16** of the turbine **14** may be measured or otherwise determined. Designing the inner housings **10** to yield a constant value for the ratio of the cross-sectional area to the radius **A/R** enhances, and potentially optimizes, the power output of the engine.

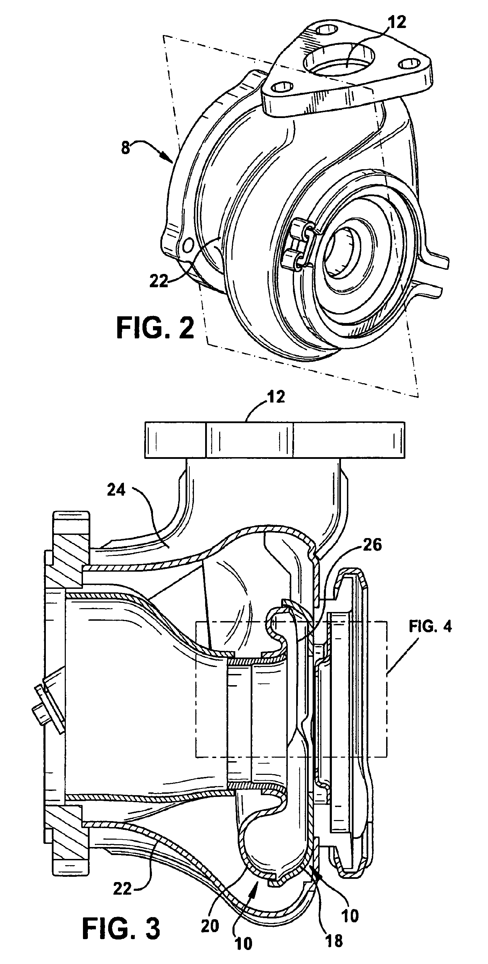

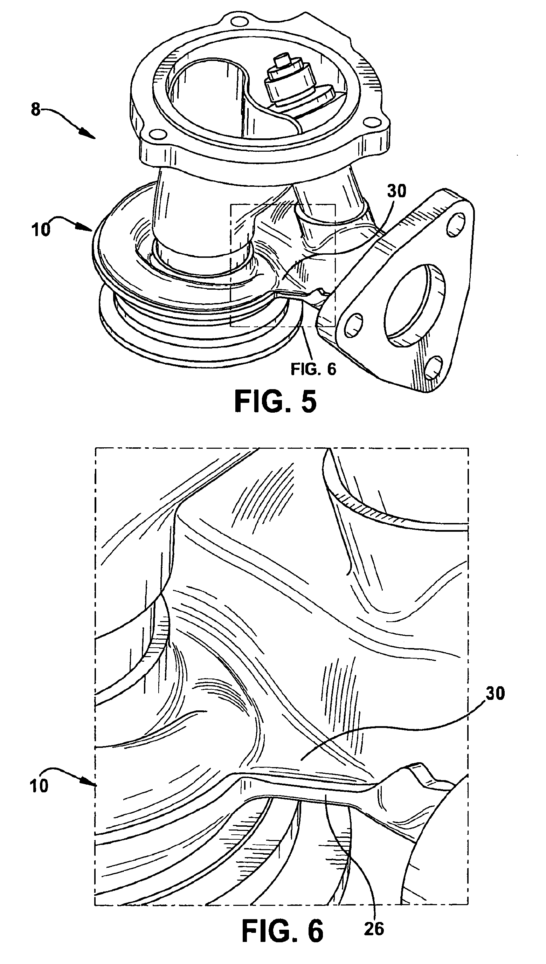

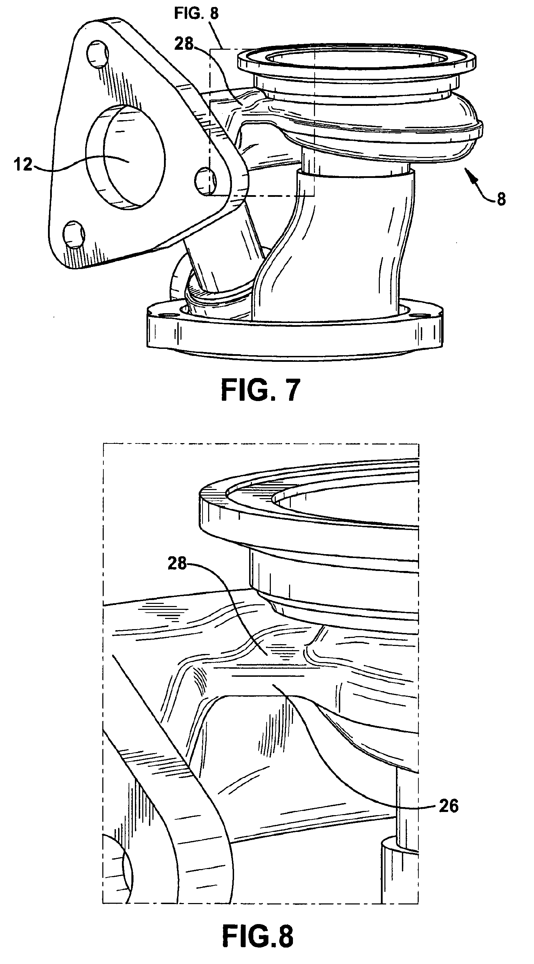

With reference to FIGS. 2-8, a turbine housing **8** includes an outer body **22** substantially surrounding an inner housing **10.** The inner housing **10** may be formed by a first shell **18** and a second shell **20.** The shells **18, 20** may be generally mirror images of each other, however, the second shell **20** may include an extrude portion **24** for allowing exhaust to exit the inner housing **10.** The shells **18, 20** may be connected together. For example, the shells **18, 20** may be welded, crimped, bonded, or connected by any other method known in the art. In an embodiment, one of the shells **18** may be slightly larger than the other shell **20** to provide an overlap section to aid in welding or otherwise attaching the shells **18, 20.**

A tongue diverter **26** may be positioned within the inner housing **10** proximate to a tight turn in the inner housing **10** where the inlet **12** terminates into the flow cavity. The tongue diverter **26** may be arranged to manage or reduce the interaction between the incoming exhaust flow and the rotational or spiral flow of exhaust gases already flowing within the inner housing **10.** The tongue diverter **26** may also be arranged and configured such that the **A/R** ratio is constant throughout the housing **10.**

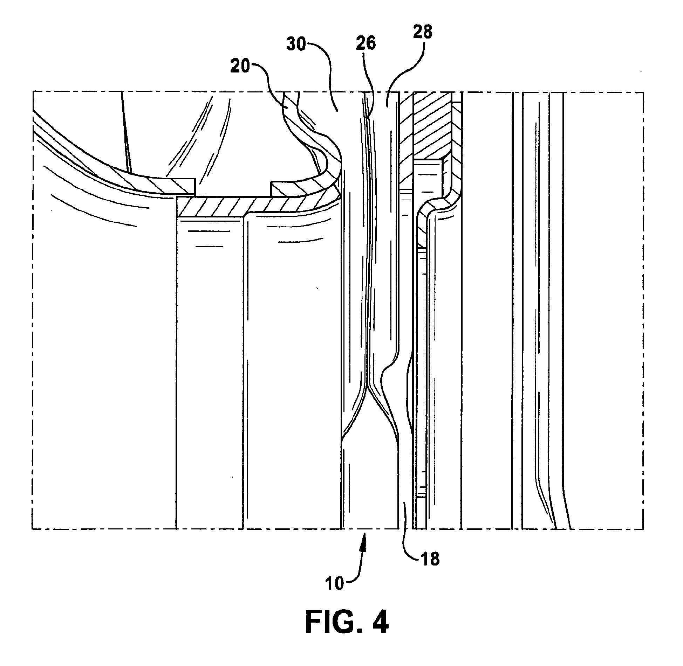

The tongue diverter **26** may be integrally formed with the shells **18, 20.** For example, as illustrated in FIGS. 3-8, the first shell **18** may include a recessed portion **28** near the inlet **12.** The second shell **20** may also include a recessed portion **30** near the inlet **12.** When the shells **18, 20** are assembled to form the housing **10,** the recessed portions **28, 30** align to form the tongue diverter **26.** The aligned recessed portions **28, 30** act as a barrier between the flow cavity near the inlet **12** and the inner flow cavity. In an embodiment shown in FIGS. 3 and 4, similarly sized and shaped recessed portions **28, 30** in the first and second shells **18, 20** abut one another to form the tongue diverter **26.** However, it will be appreciated that the tongue diverter **26** may be formed by a single recessed portion in either the first or second shell **18, 20.** It will be further appreciated that each recessed portion **28, 30** may be sized and shaped independent of the other, so as to form the tongue diverter **26.**

In an embodiment, the tongue diverter **26** may include a wall (not shown) positioned proximate to the inlet **12.** The wall may be integrally formed with either of the shells **18, 20** or may be a unitary piece attached at the inlet **12.** The wall may be formed by two or more subcomponents. The two subcomponents may be connected to form a barrier between the flow cavity near the inlet **12** and the inner flow cavity.

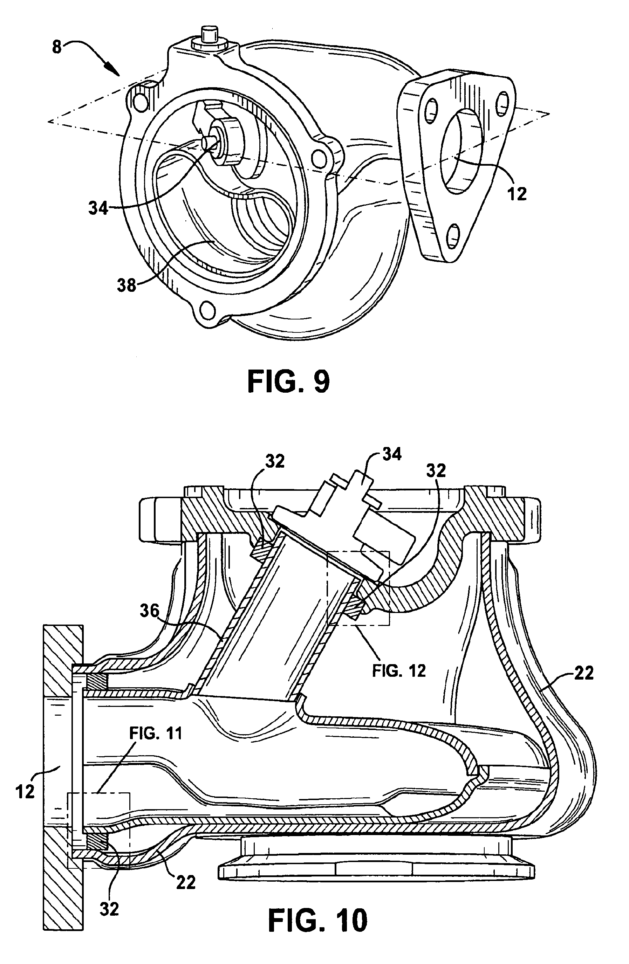

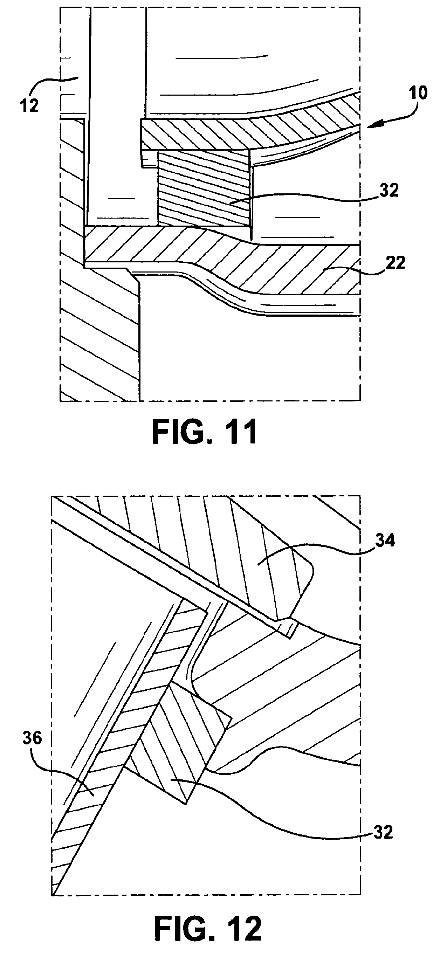

With reference to FIGS. 9-12, the turbine housing **8** may further include one or more mesh rings **32** disposed along the inner housing **10.** The mesh rings **32** may be positioned to effectively seal the inner housing **10** to prevent exhaust gas leaks. For example, mesh rings **32** may be positioned at slip joints along the inner housing **10.** In an embodiment shown in FIG. 11, a mesh ring **32** is disposed near the inlet **12,** between outer wall of the inner housing **10** and the inner wall of the outer body **22.** The mesh ring **32** is positioned to reduce exhaust leaks at the inlet joint.

The turbine housing **8** may also include a wastegate **34.** The wastegate **34** may be a valve, configured to control the speed of the turbine **14.** Specifically, at a predetermined speed or pressure, the wastegate **34** may open to allow some exhaust entering the inner housing **10** to bypass the turbine **14.** A connecting tube **36** may connect the wastegate **34** to the inner housing **10.** In an embodiment illustrated in FIG. 12, a mesh ring **32** is located around an outer wall of the connecting tube **36** near the wastegate **34.** The mesh ring **32** is positioned to reduce exhaust leaks at the wastegate joint.

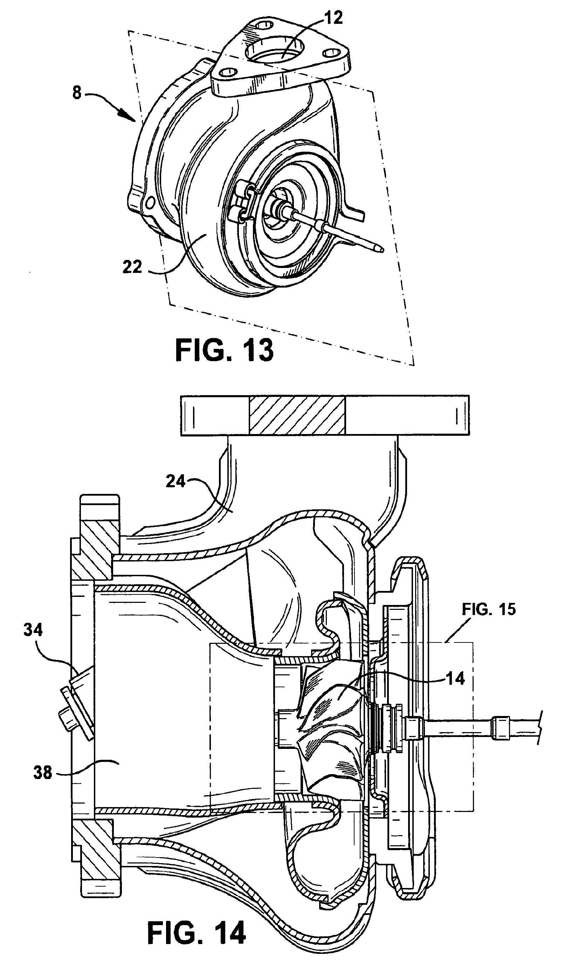

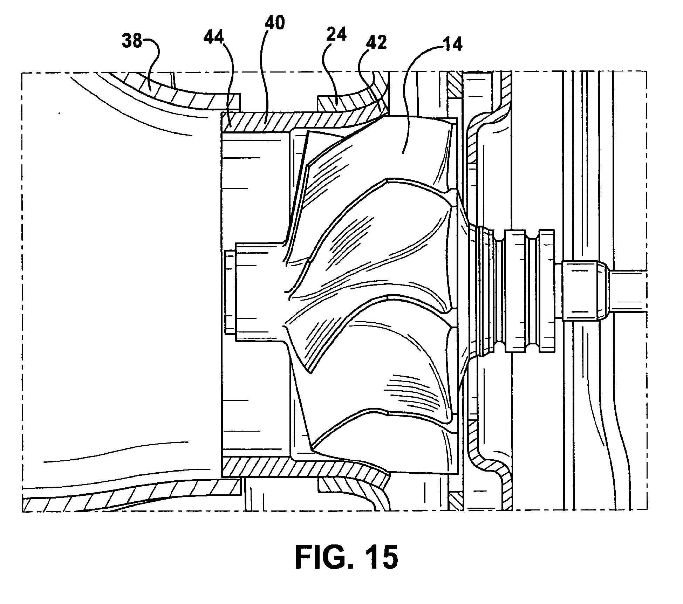

The inner housing **10** may be connected to a downpipe **38.** Exhaust gas exiting the inner housing **10** may flow through the extrude portion **24** in the inner housing **10** and into the downpipe **38.** The turbine **14** may be generally positioned within the extrude portion **24.** With reference to FIGS. 13-15, the turbine housing **8** may include an adapter tube **40.** The adapter tube **40** may be positioned to interconnect the extrude portion **24** and the downpipe **38.** For example, a first end **42** of the adapter tube **40** may be welded to the extrude portion **24,** and a second end **44** of the adapter tube **40** may be welded or otherwise connected to the downpipe **38.** It will be appreciated, however, that the adapter tube **40** may be connected to the extrude portion **24** and downpipe **38** by any manner known in the art.

The adapter tube **40** may overlap the extrude portion **24** such that the turbine **14** is positioned within the adapter tube **40.** The adapter tube **40** may thus be sized and shaped to receive to the turbine **14.** By altering the thickness and shape of the adapter tube **40,** a single turbine housing **8** may adapt to a variety of turbines **14** of varying size and geometry.

Although the preferred embodiment of the present invention has been illustrated in the accompanying drawings and described in the foregoing detailed description, it is to be understood that the present invention is not to be limited to just the preferred embodiment disclosed, but that the invention described herein is capable of numerous rearrangements, modifications and substitutions without departing from the scope of the claims hereafter.

## Claims

1. A turbine housing (8) comprising:
a housing (10) having a top shell (18) and a bottom shell (20);
a turbine (14) positioned within said housing (10); and
an inlet (12) at an outer end of said housing (10);
**characterized in that** the turbine housing (8) comprises:
a tongue diverter (26) positioned adjacent to said inlet (12), wherein said tongue diverter (26) is formed by an engagement between said top shell (18) and said bottom shell (20).

2. The turbine housing (8) of claim 1 wherein said tongue diverter (26) is capable of reducing the interaction between gasses entering the inlet (12) and gasses flowing within said housing (10).

3. The turbine housing (8) of claim 1 further comprising a flow path within said housing (10), wherein the ratio between a cross-sectional area (A) of said flow path and the distance (R) between the centroid of said cross-sectional area (A) and the center of said turbine (14) remains approximately constant along a length of said flow path.

4. The turbine housing (8) of claim 1 further comprising an outer body (22) at least partially surrounding said housing (10).

5. The turbine housing (8) of claim 4 further comprising at least one mesh ring (32) disposed between said housing (10) and said outer body (22).

6. The turbine housing (8) of claim 4 wherein a mesh ring (32) is positioned between said outer body (22) and said housing (10) near said inlet (12).

7. The turbine housing (8) of claim 1 further comprising a wastegate (34) valve connected to said housing (10).

8. The turbine housing (8) of claim 7 further comprising a connecting tube (36) disposed between said housing (10) and said wastegate (34) valve.

9. The turbine housing (8) of claim 8 further comprising a mesh ring (32) located attached to a portion of said connecting tube (36).

10. The turbine housing (8) of claim 1 further comprising an adapter tube (40) positioned about said turbine (14).

11. The turbine housing (8) of claim 10 further comprising an exhaust pipe connected to said adapter tube (40).

12. The turbine housing (8) of claim 1, wherein said housing (10) comprises a first half shell (18) and a second half shell (20).

13. The turbine housing (8) of claim 12, wherein said first half shell (18) overlaps said second half shell (20).

14. The turbine housing (8) of claim 12, wherein said first half shell (18) is welded to said second half shell (20).

15. The turbine housing (8) of claim 12, wherein said tongue diverter (26) is formed by an engagement between a recessed portion (28, 30) in said first half shell (18) and said second half shell (20).

## Patentansprüche

1. Turbinengehäuse (8), das umfasst:
ein Gehäuse (10) mit einer oberen Schale (18) und einer unteren Schale (20);
eine Turbine (14), die in dem Gehäuse (10) positioniert ist; und
einen Einlass (12) an einem äußeren Ende des Gehäuses (10);
**dadurch gekennzeichnet, dass** das Turbinengehäuse (8) umfasst:
einen Zungenschieber (26), der benachbart zu dem Einlass (12) positioniert ist, wobei der Zungenschieber (26) durch einen Eingriff zwischen der oberen Schale (18) und der unteren Schale (20) ausgebildet ist.

2. Turbinengehäuse (8) nach Anspruch 1, wobei der Zungenschieber (26) fähig ist, die Wechselwirkung zwischen Gasen, die in den Einlass (12) eintreten und Gasen, die innerhalb des Gehäuses (10) strömen, zu verringern.

3. Turbinengehäuse (8) nach Anspruch 1, das ferner einen Strömungsweg innerhalb des Gehäuses (10) umfasst, wobei das Verhältnis zwischen einer Querschnittfläche (A) des Strömungswegs und dem Abstand (R) zwischen dem Schwerpunkt der Querschnittfläche (A) und der Mitte der Turbine (14) entlang einer Länge des Strömungswegs ungefähr konstant bleibt.

4. Turbinengehäuse (8) nach Anspruch 1, das ferner einen äußeren Körper (22) umfasst, der das Gehäuse (10) wenigstens teilweise umgibt.

5. Turbinengehäuse (8) nach Anspruch 4, das ferner wenigstens einen Maschenring (32) umfasst, der zwischen dem Gehäuse (10) und dem äußeren Körper (22) angeordnet ist.

6. Turbinengehäuse (8) nach Anspruch 4, wobei ein Maschenring (32) in der Nähe des Einlasses (12) zwischen dem äußeren Körper (22) und dem Gehäuse (10) positioniert ist.

7. Turbinengehäuse (8) nach Anspruch 1, das ferner ein Überström- bzw. Überdruckventil (34) umfasst, das mit dem Gehäuse (10) verbunden ist.

8. Turbinengehäuse (8) nach Anspruch 7, das ferner ein Verbindungsrohr (36) umfasst, das zwischen dem Gehäuse (10) und dem Überdruckventil (34) angeordnet ist.

9. Turbinengehäuse (8) nach Anspruch 8, das ferner einen Maschenring (32) umfasst, der an einem Abschnitt des Verbindungsrohrs: (36) angebracht angeordnet ist.

10. Turbinengehäuse (8) nach Anspruch 1, das ferner ein Anpassrohr (40) umfasst, das um die Turbine (14) positioniert ist.

11. Turbinengehäuse (8) nach Anspruch 10, das ferner eine Abluftleitung umfasst, die mit dem Anpassrohr (40) verbunden ist.

12. Turbinengehäuse (8) nach Anspruch 1, wobei das Gehäuse (10) eine erste Halbschale (18) und eine zweite Halbschale (20) umfasst.

13. Turbinengehäuse (8) nach Anspruch 12, wobei die erste Halbschale (18) die zweite Halbschale (20) überlappt.

14. Turbinengehäuse (8) nach Anspruch 12, wobei die erste Halbschale (18) an die zweite Halbschale (20) geschweißt ist.

15. Turbinengehäuse (8) nach Anspruch 12, wobei der Zungenschieber (26) durch einen Eingriff zwischen einem vertieften Abschnitt (28, 30) in der ersten Halbschale (18) und der zweiten Halbschale (20) ausgebildet ist.

## Revendications

1. Carter de turbine (8) comprenant :
un carter (10) ayant une coque supérieure (18) et une coque inférieure (20) ;
une turbine (14) positionnée au sein dudit carter (10) ; et
une entrée (12) à une extrémité externe dudit carter (10) ;
**caractérisé en ce que** le carter de turbine (8) comprend :
un dérouteur à languette (26) positionné de manière adjacente à ladite entrée (12), dans lequel ledit dérouteur à languette (26) est formé par un engagement entre ladite coque supérieure (18) et ladite coque inférieure (20).

2. Carter de turbine (8) selon la revendication 1, dans lequel ledit dérouteur à languette (26) est capable de réduire l'interaction entre des gaz pénétrant dans l'entrée (12) et des gaz s'écoulant au sein dudit carter (10).

3. Carter de turbine (8) selon la revendication 1, comprenant en outre un chemin d'écoulement au sein dudit carter (10), dans lequel le rapport entre une section (A) dudit chemin d'écoulement et la distance (R) entre le centroïde de ladite section (A) et le centre de ladite turbine (14) reste approximativement constant le long d'une longueur dudit chemin d'écoulement.

4. Carter de turbine (8) selon la revendication 1, comprenant en outre un corps externe (22) entourant au moins partiellement ledit carter (10).

5. Carter de turbine (8) selon la revendication 4, comprenant en outre au moins un anneau en maille (32) disposé entre ledit carter (10) et ledit corps externe (22).

6. Carter de turbine (8) selon la revendication 4, dans lequel un anneau en maille (32) est positionné entre ledit corps externe (22) et ledit carter (10) près de ladite entrée (12).

7. Carter de turbine (8) selon la revendication 1, comprenant en outre une soupape de décharge (34) connectée audit carter (10).

8. Carter de turbine (8) selon la revendication 7, comprenant en outre un tube de connexion (36) disposé entre ledit carter (10) et ladite soupape de décharge (34).

9. Carter de turbine (8) selon la revendication 8, comprenant en outre un anneau en maille (32) situé de manière reliée à une portion dudit tube de connexion (36).

10. Carter de turbine (8) selon la revendication 1, comprenant en outre un tube adaptateur (40) positionné autour de ladite turbine (14).

11. Carter de turbine (8) selon la revendication 10, comprenant en outre un tuyau d'échappement connecté audit tube adaptateur (40).

12. Carter de turbine (8) selon la revendication 1, dans lequel ledit carter (10) comprend une première demie coque (18) et une seconde demie coque (20).

13. Carter de turbine (8) selon la revendication 12, dans lequel ladite première demie coque (18) chevauche ladite seconde demie coque (20).

14. Carter de turbine (8) selon la revendication 12, dans lequel ladite première demie coque (18) est soudée à ladite seconde demie coque (20).

15. Carter de turbine (8) selon la revendication 12, dans lequel ledit dérouteur à languette (26) est formé par un engagement entre une portion en retrait (28, 30) dans ladite première demie coque (18) et ladite seconde demie coque (20).
